# EUROPEAN PATENT APPLICATION

(11) **EP 4 343 793 A1**
(43) Date of publication of application: **27.03.2024**
(21) Application number: 23198130.9
(22) Date of filing: 19.09.2023
(51) Int. Cl.: H01B 7/42, B60L 53/302

(54) **POWER SUPPLY CABLE, POWER CHARGING CABLE ASSEMBLY AND SYSTEM THEREOF**

(30) Priority: 21.09.2022 IT 202200019320
(71) Applicant: Prysmian S.p.A., 20126 Milan (IT)
(72) Inventor: FERLAY, Benjamin, Berlin (DE); NEUMANN, Andreas, Mitwitz (DE)
(74) Representative: Porta & Consulenti Associati S.p.A.

(57) **Abstract**

A power supply cable (20; 40; 50; 70) comprising a plurality of conductor assemblies (10; 30; 60), each conductor assembly comprising an electrical conductor (14; 63) and a cooling tube (11) defining a central internal passage for carrying a cooling fluid, wherein the cooling tube (11) comprises an inner polymeric layer (12) in contact with the internal passage (17) and an outer polymeric layer (13) surrounding the inner polymeric layer (12), and the inner polymeric layer (12) has a first Shore D hardness value and the outer polymeric layer has a second Shore D hardness value, the first Shore D hardness value being larger than the second Shore D hardness value.

The present disclosure further relates to a power charging cable assembly and a charging system including said power supply cable.

## Description

### Related field

The present disclosure concerns a power supply cable, in particular a power supply cable for charging electric vehicles or more generally electric devices including batteries, in the following referred also to as charging cable. The present disclosure further relates to a power charging cable assembly and a charging system including said power supply cable.

### Background

Power supply cables are typically used in power charging cable assemblies that are connected with a charging station for the charging of electric vehicles or more generally of electric batteries for electrically-powered vehicles. Charging cable assemblies typically include a plug connector or charging gun for the connection to a receptacle (socket) that is electrically connected to the vehicle's battery and a power supply cable that is connected, at opposite ends, to the plug connector and to the charging station, either by means of a second plug connector or a permanent connection to the electric network within the charging station. Reducing the time the electric vehicles need to be charged at the charging station is widely felt as a significant factor impacting the use of the technology, such as for long-distance transportation. This requires high power transmission through the charging cable, in particular high current.

Circulation of high currents within the charging cable during the charging process produces heat that needs to be dissipated. Presently, to mitigate the risk of thermal damage, fast charging may employ a charging cable which use liquid cooling technology to dissipate the heat created by the high currents circulating so as to maintain a relatively low temperature. To this purpose, liquid-cooled cables are employed. The plug connector and/or the permanent connection in the charging station may also be provided with a cooling circuit. In this case, liquid-cooled charging cable assemblies may use separate cooling loops for the cable and the plug connector.

EP3734618 A1 describes a charging system for an electric energy storage comprising a charging cable assembly, a plug transition between said charging cable assembly and the electric energy storage, said charging cable assembly comprising a cable provided with at least two separate power conductors and at least one earth conductor, wherein the at least two separate power conductors are spaced a distance apart from each other within said cable, each power conductor surrounds at least one tube, and each power conductor comprises a plurality of intertwisted wires stranded around said tube, wherein said charging cable assembly comprises at least two separate cooling circuits within said cable, namely a first cooling circuit comprising a cooling fluid in the tubes surrounded by the at least two power conductors and a second cooling circuit comprising a cooling fluid in auxiliary tubes to cool the plug transition. The high-current cable described in the document comprises at least two separate power conductors and one earth conductor, wherein the two separate power conductors are spaced a distance apart from each other within the cable assembly.

Utility model CN208589277 U discloses a high-power cable with a cooling function for a charging cable assembly. The cable includes first and second cooling tube with a lumen including a respective wire core and a first insulating layer, the wire core is wound on the cooling tube, and the first insulating layer is wrapped around the outside of the metal wire. The first wire core is for transmitting the positive current of the DC power supply and the second wire core is for transmitting the negative current of the DC power supply. Several polymeric materials are mentioned for the cooling tube, which can be made of PVC, PE, PP, polyolefin, nylon, polyurethane, polytetrafluoroethylene.

EP3493224 A1 relates to a power supply cable which is used for power supply to a vehicle, comprising: a plurality of electrical wires being twisted together, each of which includes a cooling pipe having flexibility, an electrical conductor surrounding the cooling pipe, and an insulator surrounding the electrical conductor; and a sheath that covers the plurality of the electrical wires. In examples, the cooling pipe is formed of Nylon 12, which is said to be excellent in heat resistance and insulating properties, as well as flexibility and durability.

### Summary

Customarily, the cooling tube of a conductor assembly in a liquid-cooled charging cable is electrically insulating (not to interfere with the electrical conductor carrying the current) and is typically made of a polymeric material. The cooling fluid used to cool the conductor assembly carrying high currents are generally required to be dielectric, stable at high temperatures and with a high heat transfer coefficient. Suitable fluids running through the tube are generally selected to be compatible with the tube material.

The electrical conductors of a conductor assembly are typically in the form of electrical wires stranded around the cooling tube or arranged within the internal passage of the cooling tube to be immersed in the cooling fluid, when the charging cable is in use.

The Applicant has observed that a cooling tube made of a "stable" polymeric material may mitigate the risk of collapse of the tube hollow passage. In this respect, also a partial collapse of the tube may limit the flow of the fluid through an increase of the pressure drop, thus degrading the cooling performance of the conductor assembly. A good mechanical resistance of the tube is therefore required. A suitable chemical resistance of the polymeric material to the cooling fluid is also desirable. A flexible behavior of the power supply cable can be also desired since, during use, the charging cable can be often subject to external strain or bending stress.

The Applicant has also considered that use of a "soft" polymeric material having a relatively low hardness value for the cooling tube would improve flexibility of the conductor assemblies and thus of the power supply cable.

The Applicant has recognized that provision, in a charging cable, of conductor assemblies having a cooling tube comprising an inner layer in contact with the tube internal passage and an outer layer surrounding the inner layer, the inner layer being made of a polymeric material having a hardness larger than the hardness of the outer layer, can meet robustness and flexibility of the conductor assembly. In particular, the polymeric material in contact with the cooling fluid can be made of a harder material while an outer layer material can bring flexibility.

The physical property of a material of being "hard" or "soft" can be quantified by a measurement of the "hardness" parameter, which is defined as a material's resistance to permanent indentation. There are different scales on which the hardness parameters can be quantified. Within the present description and claims, hardness of polymeric materials is quantified by using the Shore D hardness scale. The Applicant has devised a power supply cable comprising at least two conductor assemblies, each conductor assembly comprising a cooling tube, wherein the respective cooling tube comprises two polymeric layers, the two polymeric layers having distinct hardness values. More specifically, the cooling tube of the conductor assembly comprises an inner polymeric layer having a first Shore D hardness value and an outer polymeric layer having a second Shore D hardness value, wherein the first Shore D hardness value is larger than the second Shore D hardness value.

In the description and claims that follow, with "hardness value" it is meant a Shore D hardness value.

According to the present disclosure, a power supply cable is provided, the power supply cable comprising: a plurality of conductor assemblies, each conductor assembly comprising an electrical conductor and a cooling tube defining a central internal passage for carrying a cooling fluid, wherein

the cooling tube comprises an inner polymeric layer in contact with the internal passage and an outer polymeric layer surrounding the inner polymeric layer, and the inner polymeric layer has a first Shore D hardness value and the outer polymeric layer has a second Shore D hardness value, the first Shore D hardness value being larger than the second Shore D hardness value.

In embodiments, the cooling tube consists of the outer polymeric layer and the inner polymeric layer arranged one on top of the other.

The Applicant has observed that a "soft" material having a relatively low hardness value for the outer polymeric layer provides for more adherence of the electrical conductor to the cooling tube, thereby reducing the slipping of the electrical conductor out of the radially outer surface of the cooling tube.

Within the present description and claims, a "conductor assembly" indicates a semi-finished structure of the power supply cable longitudinally extending along the cable length and including a cooling tube.

With plurality of conductor assemblies it is meant at least two conductor assemblies. With "core structure" it is meant a more generic semi-finished structure of the power supply cable longitudinally extending along the cable. By way of non-limiting examples, a core structure may be a conductor assembly, an earth conductor or a data transmission unit.

In embodiments, the first hardness value of the inner polymeric layer is from 55 to 95.

In embodiments, the inner polymeric layer is selected from the group consisting of thermoplastic elastomer (TPE), polyamide, polyurethane, and silicone.

In embodiments, the second hardness value of the outer polymeric layer is from 15 to 50. In some embodiments, the second hardness value is from 15 to 45.

In embodiments, the outer polymeric layer is made of TPE or polyamide. In an embodiment, the outer polymeric layer is a thermoplastic polyurethane (TPU) layer with hardness value from 30 to 40. In another embodiment, the outer polymeric layer is a polyamide layer with hardness value from 40 to 45.

In an exemplary embodiment, the inner polymeric layer is made of polyamide 11 (PA11) or polyamide 12 (PA12) with hardness value of 55 to 95 and the outer polymeric layer is made of PA11 or PA12 with hardness value from 40 to 45. Softening additives may be employed for the outer polymeric layer to modify, such as to decrease, its hardness value.

The Applicant has observed that an inner polymeric layer made of a material having a significant presence of gas phase and/or of void volume would worsen the mechanical properties of the cooling tube.

In embodiments, which are described in more detail below, where the electrical conductor is positioned to surround the outer polymeric layer of the cooling tube, the Applicant has noticed that a cooling tube made of a material having a significant amount of gas/voids would reduce the heat transfer between the electrical conductor and the cooling fluid.

In embodiments, which are described in more detail below, where the conductor is positioned within the internal passage of the cooling tube, the conductor may contact the inner polymeric layer due to movements of the conductor within the cooling tube and it may damage and thus weaken the inner polymeric layer.

In embodiments, the inner polymeric layer is made of a non-expanded polymeric material. Within the present description and claims, a non-expanded polymeric material is meant a material essentially non-porous, for example having less than 3% of free space inside the material, with "free space" referring to the space not occupied by the polymer (e.g. air or gas).

In embodiments, the outer polymeric layer is made of a non-expanded polymeric material.

In an embodiment, the cooling tube comprises or consists of the outer polymeric layer and the inner polymeric layer, wherein each of the inner polymeric layer and the outer polymeric layer is made of non-expanded polymeric material.

The Applicant has noted that the inner polymeric layer of larger hardness value may be made of a relatively small thickness compared to the thickness of the cooling tube, thereby further improving flexibility of the tube.

In embodiments, the cooling tube has a total thickness of 1 to 4 mm. In an embodiment, the cooling tube has a thickness of 1.5 to 3.0 mm.

In embodiments, the thickness of the inner polymeric layer is of less than or equal to 40% of the total thickness of the cooling tube.

In an embodiment, the thickness of the inner polymeric layer is of less than or equal to 30% of the total thickness of the cooling tube.

In embodiments, the plurality of conductor assemblies of the power supply cable is positioned within the cable at a distance from one another.

In embodiments, a polymeric filler fills the interstitial spaces between the conductor assemblies and, more generally, between the core structures included in the charging cable.

In embodiments, the electrical conductor of the respective conductor assembly is positioned to surround and be in contact with the outer polymeric layer of the cooling tube.

In embodiments where the electrical conductor surrounds the cooling tube, an electrically insulating layer surrounds the electrical conductor to form the most radially external layer of the conductor assembly.

In embodiments, the electrical conductor includes a plurality of metallic wires or a plurality of groups of bunched wires or stranded wires on and around the outer polymeric layer.

For an electrical conductor including or consisting of wires, bunched wires or groups of stranded wires, also when a suitable "soft" polymeric material is employed, these wires or wire groups may tend to glide onto the outer surface of the outer polymeric layer of the cooling tube.

This may hold in particular with wires or wire groups having a relatively small diameter, such as Al or Cu wires having a diameter below 0.6 mm. In several embodiments, the diameter of the Al or Cu wires is between 0.21 mm and 0.51 mm. In some practical examples, wires forming groups of stranded wires of the electrical conductor of the power supply cable are grouped as Class 5 or Class 6 stranded conductors, according to European Cable Stranding IEC 60228.

The Applicant has noted that a corrugated surface may prevent the wires from making relatively small movements on the outer tube surface. In this way, wires keep their position during stranding of individual or grouped wires on the outer tube surface and/or during the extrusion of an insulting polymeric layer on the stranded wires/wire groups.

In embodiments, the outer polymeric layer has a corrugated radially outer surface. As used herein and according to the customary meaning, with "corrugated surface" is meant a surface of uneven shape. Corrugations may have different shapes, such as substantially rectangular or triangular shape or wave-shape.

In embodiments, the corrugated outer surface of the outer polymeric layer comprises peaks and valleys, the peaks extending radially outwardly and the valley extending radially inwardly. In embodiments, the corrugated surface is defined by a waveform having peaks and valleys.

In embodiments, the corrugations of the radially outer surface of the outer polymeric layer are adapted to accommodate wires or wire bundles. In some embodiments, the peak-to-peak distance, measured from centre to centre of the peaks, of the exterior corrugated surface is of at least 0.2 mm.

In an embodiment, the peak-to-peak distance is of from 0.2 to 0.5 mm.

In embodiments, the peak-to-valley height is at most 0.2 mm. In an embodiment, the peak-to-valley height is from 0.02 mm to 0.2 mm.

Typically, following the stranding of wires, a polymeric insulating layer is extruded on the wires for electrical insulation. The arrangement of the wires on the uneven outer surface makes sure that the wires are kept in place.

In other embodiments according to the present disclosure, the electrical conductor of a respective conductor assembly of the power supply cable is centrally positioned within the internal passage of the cooling tube and includes a group of stranded or bunched wires. When in use, a cooling fluid runs through the cooling tube, and the conductor is directly immersed in the cooling fluid. An electrically insulating layer may surround the cooling tube.

Within the present description and claims, by "radially" or "radial direction" it is meant a direction substantially perpendicular to the axial direction of the cable, the latter being typically taken along the cable length. The terms "inner" and "outer" or "radially inner" and "radially outer", with reference to the elements within the cable, are intended to refer to the relative radial position thereof.

"Insulating layer" indicates an electrically insulated layer, unless otherwise specified. The present disclosure relates also to a power charging cable assembly comprising a power supply cable as described in the present disclosure, wherein
the power supply cable has a first cable end and a second opposite cable end, and
the power supply cable is provided a first plug connector connected at the first cable end and with a termination portion at the second cable end.

The present disclosure pertains also to a charging system that comprises:
- a power charging cable assembly according to the present disclosure, wherein the power supply cable of the charging cable assembly includes first and second conductor assemblies having respective first and second electrical conductors and respective first and second cooling tubes;
- a charging device comprising
   a socket outlet configured to be connected, by means of the termination portion of the power charging cable assembly, to said respective electrical conductors of the first and second conductor assemblies, and
   a cooling unit connected, by means of the termination portion, to the respective first and second cooling tubes of the first and second conductor assemblies, wherein
the cooling unit is configured to pump a cooling fluid into the first cooling tube for guiding the fluid from the charging device toward the first plug connector through the first cooling tube and, through the second cooling tube in fluid connection with the first cooling tube, from the first plug connector back to the charging device.

### Brief description of the drawings

The present disclosure will be now described more in detail hereinafter with reference to the accompanying drawings, in which some, but not all embodiments of the disclosure are shown. Drawings illustrating the embodiments are not-to-scale schematic representations.

For the purpose of the present description and of the appended claims, except where otherwise indicated, all numbers expressing amounts, quantities, percentages, and so forth, are to be understood as being modified in all instances by the term "about". Also, all ranges include the maximum and minimum points disclosed and include any intermediate ranges therein, which may or may not be specifically enumerated herein.
FIG. 1 is a schematic cross-sectional view of a first embodiment of a conductor assembly for a power supply cable according to the present disclosure.
FIG. 2 shows a cross-sectional view of a power supply cable including conductor assemblies of the type described with reference to FIG. 1, according to an embodiment of the present disclosure.
FIG. 3 is a partial perspective view of the power supply cable of FIG. 2.
FIG. 4 is a cross-sectional view of a power supply cable according to another embodiment of the present disclosure.
FIG. 5 is a cross-sectional view of a second embodiment of a conductor assembly for a power supply cable according to the present disclosure.
FIG. 6 shows a cross-sectional view of a power supply cable including conductor assemblies of the type described with reference to FIG. 5, according to an embodiment of the present disclosure.
FIG. 7 is a cross-sectional view of a third embodiment of a conductor assembly for a power supply cable according to the present disclosure.
FIG. 8 is a cross-sectional view of a power supply cable including conductor assemblies of the type described with reference to FIG. 7, according to an embodiment of the present disclosure.
FIG. 9 is a pictorial not-to-scale representation of a waveform of the corrugated surface of the outer polymeric layer, according to an embodiment.
FIG. 10 is a schematic diagram of a power charging cable assembly, according to an embodiment of the present disclosure.
FIG. 11 is a schematic diagram for illustrating an exemplary embodiment of a charging system comprising the power charging cable assembly including a power supply cable according to the present disclosure.

In general, the same reference numeral will be used for possible variant embodiments of similar elements.

### Detailed description

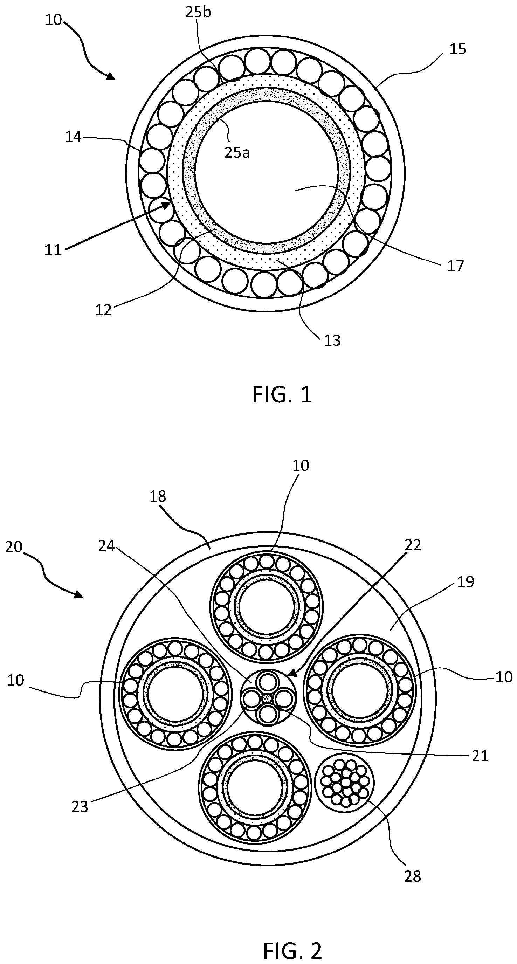

Figure 1 depicts a conductor assembly 10 for a power supply cable according to a first embodiment of the present disclosure. The conductor assembly has a generally circular cross-section and extends along an axial direction. The conductor assembly 10 comprises a centrally positioned cooling tube 11 defining a central internal passage 17 for carrying a cooling fluid (not indicated).

The cooling tube 11 comprises an inner polymeric layer 12 defining the internal passage 17 and in contact with the cooling fluid, and an outer polymeric layer 13 surrounding the inner polymeric layer 12.

The cooling tube 11 has a radially inner surface 25a in contact with the internal passage 17 and an opposite radially outer surface 25b.

Specifically, the inner polymeric layer 12 has a radially inner surface that defines the inner surface 25a of the cooling tube 11, whereas the outer polymeric layer 13 has a radially outer surface that defines the outer surface 25b of the cooling tube.

In an embodiment, the outer polymeric layer 13 overlays and is in contact with the inner polymeric layer 12.

In an embodiment, the cooling tube 11 consists of the inner and the outer polymeric layer 12, 13.

In conductor assembly 10, an electrical conductor 14 is arranged in a radially external position with respect to the cooling tube, in particular on the outer surface 25b of cooling tube 11, i.e. on the outer polymeric layer 13. In embodiments, the electrical conductor 14 includes or consists of a plurality of metallic wires or of groups of wires, wherein the individual wires or the wire groups are stranded on and around the outer polymeric layer 13 of the cooling tube 11. In an embodiment, the plurality of metallic wires or wire groups are helically wound around the outer polymeric layer 13.

In an embodiment, the groups of stranded wires are grouped as Class 5 or Class 6 stranded conductors.

In an embodiment (not shown in the Figures), the electrical conductor 14 has a plurality of layers of wires placed one on top of the other, wherein each layer of wires has a helical winding of the wires in different directions.

An electrically insulating layer 15 surrounds the electrical conductor 14.

Elements of the conductor assembly 10 placed on/over the cooling tube 11 are located substantially co-axial with the cooling tube 11.

The inner polymeric layer 12 has a first Shore D hardness value and the outer polymeric layer 13 has a second Shore D hardness value, the first hardness value being larger than the second hardness value.

In embodiments, the first hardness value is from 55 to 95. In embodiments, the inner polymeric layer 12 is selected from the group consisting of thermoplastic elastomer (TPE), polyamide, polyurethane and silicone.

In embodiments, the second hardness value is from 15 to 50. In some embodiments, the second hardness value is from 15 to 45.

In embodiments, the outer polymeric layer 13 is made of TPE or polyamide. In an embodiment, the outer polymeric layer is a TPU (thermoplastic polyurethane) layer with hardness value from 30 to 40. In another embodiment, the outer polymeric layer is a polyamide layer with hardness value from 40 to 45.

In an example, the inner polymeric layer 12 is made of PA11 or PA12 with hardness value of 55 to 95 and the outer polymeric layer is made of PA11 or PA12 with hardness value from 40 to 45.

In one or more embodiments, the inner polymeric layer 12 exhibits a good chemical resistance.

The cooling tube 11 made of the inner and the outer polymeric layer 12, 13 may have a thickness of 1 to 4 mm. In an embodiment, the cooling tube thickness is of 1.5 to 3 mm.

In embodiments, the inner polymeric layer 12 is made of a non-expanded polymeric material.

In embodiments, the outer polymeric layer 13 is made of a non-expanded polymeric material.

In an embodiment, each of the inner polymeric layer 12 and the outer polymeric layer 13 is made of non-expanded polymeric material.

The cooling tube 11 made of the inner and the outer polymeric layer 12, 13 may have a thickness of 1 to 4 mm. In an embodiment, the thickness of the cooling tube 11 is of 1.5 to 3 mm.

In embodiments, the thickness of the inner polymeric layer 12 is of less than or equal to 40% of the total thickness of the cooling tube 11.

In an embodiment, the thickness of the inner polymeric layer 12 is of less than or equal to 30% of the total thickness of the cooling tube 11.

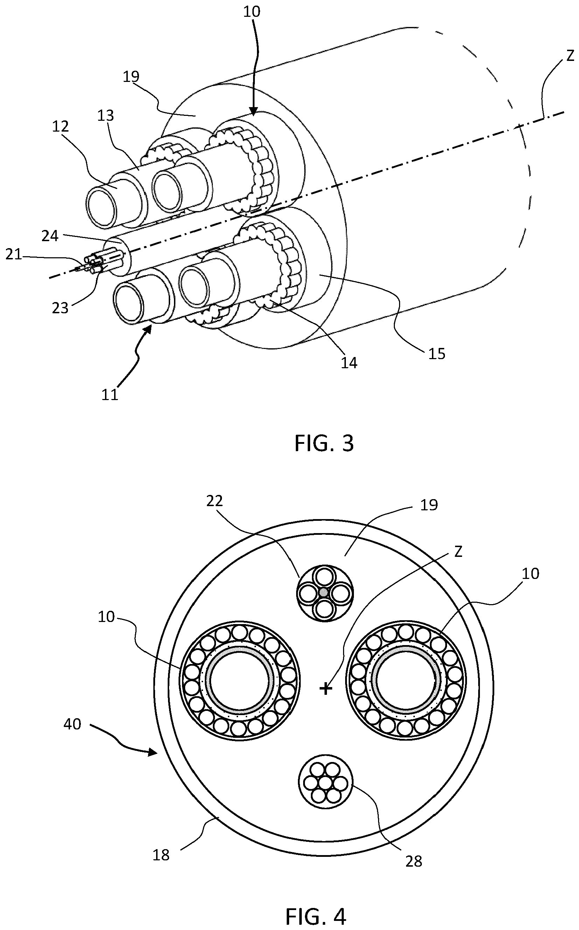

Figures 2 and 3 show a power supply cable 20 according to an embodiment of the present disclosure. The cable 20 extends along a central Z-axis (indicated in Fig. 3) for a length (when deployed in a straight line) and comprises a plurality of conductor assemblies 10 described with reference to Fig. 1, in the non-limiting example four conductor assemblies. The conductor assemblies 10 are arranged separately from one another in a radial arrangement about the Z-axis.

The cable 20 of the embodiments shown in Figs. 2 and 3 is a round cable having a circular cross-section centered in the Z-axis.

In the example illustrated in the Figs. 2-3, the plurality of conductor assemblies 10 are radially arranged about a data transmission unit 22 extending along the Z-axis. The data transmission unit 22, which can be of conventional type, includes one or more transmission cables 23, which can be insulated copper pilot cores and/or optical fibers, for transmission of control signals and/or other data signals. Within the data transmission unit 22, transmission cables 23 are arranged around a central thread member 21 extending along the Z-axis. In the embodiment shown in Figs. 2 and 3 the transmission cables 23 of the data transmission unit are embedded in a filling material 24. The plurality of conductor assemblies 10 are helically wound about the centrally positioned data transmission unit 22, in accordance with conventional methods.

However, the data transmission unit 22 may be differently positioned within the cable 20. In particular, the transmission element may be placed at any interstitial space between the conductor assemblies 10.

An earth conductor 28 is positioned in the interstitial space between two conductor assemblies 10.

In the embodiment of Figs. 2-3, the Z-axis is a symmetry axis of the radially external conductor assemblies 10 or more generally of the peripheral core structures, which are radially external to the central thread member 21.

A polymeric filler 19 is extruded around the core structures 10, 22, 28. As generally known, the main functions of the filler 19 is that to maintain the distance between the peripheral core structures radially external to the central tread member 21 and to fill the interstitial space between the core structures. In particular, the conductor assemblies 10 are positioned within the cable at a distance from one another. The polymeric filler 19 can be made of an electrically insulating material.

An outer jacket 18 made of a polymeric material surrounds the filler 19. The outer jacket 18 (not shown in Fig. 3), which may be extruded on the filler 19, forms the exterior of the power supply cable 20.

The core structures may include, in addition to the at least two conductor assemblies 10, additional earth conductors and/or transmission elements (not shown).

When power supply cable 20 is in use, a cooling fluid runs through the cooling tubes of the respective conductor assemblies 10. The cooling fluid is per se known. Non-limiting examples of cooling fluids are oil, dielectric fluids, ethylene glycol, a mixture of water and ethylene glycol, and pure water.

Figure 4 illustrates a cross-sectional view of a charging cable, according to a second embodiment of the present disclosure. Charging cable 40 comprises two separate conductor assemblies 10 of the type described with reference to Fig. 1. The two separate conductor assemblies 10 are arranged symmetrically with respect to the central Z-axis and run parallel to the Z-axis. In some embodiments, the two separate conductor assemblies 10 are helically wound around Z-axis.

The cable further includes a data transmission unit 22 and an earth conductor 28, both running parallel with respect to the Z-axis. In some embodiments, the data transmission unit 22 and the earth conductor 28 are helically wound around Z-axis. The core structures 10, 22, 28 are placed at a distance from one another within the charging cable 40.

A polymeric filler 19 fills the interstitial spaces between the core structures 10, 22, 28 and an outer jacket 18 surrounds and covers the filler 19.

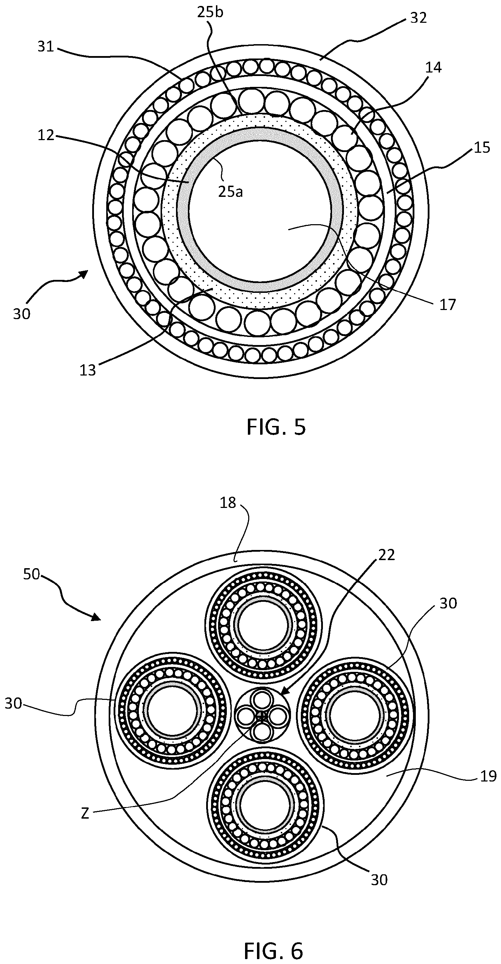

Figure 5 is a cross-sectional view of a conductor assembly according to another embodiment consistent with the present disclosure. Same numbers are used to identify like components having the same or similar functions to the elements of Fig. 1. With respect to the embodiment of Fig. 1, conductor assembly 30 comprises an earth conductor 31 placed on the insulating layer 15 surrounding the electrical conductor 14. The earth conductor 31 surrounds the insulating layer 15. An external insulating layer 32 covers the earth conductor 31.

Figure 6 is a cross-sectional view of a charging cable according to an embodiment consistent with the present disclosure. Charging cable 50 includes a plurality of conductor assemblies 30 described with reference to Fig. 5. Due to the provision of an earth conductor within the conductor assemblies, an earth conductor as external element from the conductor assemblies may not be necessary. Conductor assemblies 30 are arranged radially about the central axis Z. An optional data transmission element 23 described in the foregoing is placed along the Z-axis. A polymeric filler 19 fills the interstitial spaces between the core structures 30 and an outer jacket 18 surrounds the filler 19.

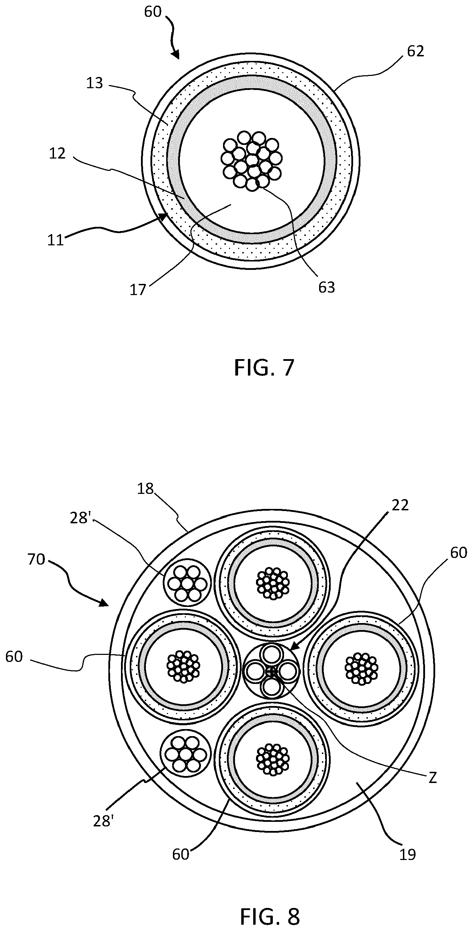

Figure 7 illustrates a cross-sectional view of a conductor assembly 60 according to a further embodiment consistent with the present disclosure. Conductor assembly 60 comprises a cooling tube 11 of the type described with reference to Fig. 1 and an electrical conductor 63 arranged within the internal passage 17 and extending axially along the cooling tube 11. In an embodiment, the conductor 63 is centrally positioned within the internal passage 17 of the cooling tube 11. The conductor 63 includes or consists of a group of stranded wires wound about a central longitudinal direction of the conductor assembly. In an alternative form, a group of wires are stranded about a central thread (not shown) arranged in the central longitudinal direction of the conductor assembly. An insulating layer 62 surrounds the cooling tube 11.

In an embodiment, the conductor 63 can move in radial direction within the cooling tube 11. Therefore, a relative movement between the cooling tube 11 and conductor 63 is permitted.

In other embodiments, the conductor 63 is kept in a fixed position within the cooling tube 11, i.e. the conductor is blocked with respect to the cooling tube, for example in the center of the internal passage 17 of the cooling tube 11. In an embodiment, an electrically insulating spacer or yarn (not shown) is helically wound around the conductor 63 ensuring that a constant distance between the conductor 63 and the cooling tube 11 is kept. In an embodiment, the cooling tube 11 includes a spacer (not shown) ensuring that a constant distance between the conductor 63 and the cooling tube 11 is kept.

Figure 8 illustrates a cross-sectional view of a charging cable 70 including a plurality of conductor assemblies 60 described with reference to Fig. 7, according to an embodiment of the present disclosure.

The plurality of conductor assemblies 60 are helically wound about the Z-axis of the charging cable 70. In an embodiment, the Z-axis is a symmetry axis of the radially external conductor assemblies 60 or more generally of the peripheral core structures, which are radially external to the central Z-axis. In the example shown in Fig. 8, the charging cable 70 includes an optional data transmission unit 22 of the type described in the foregoing, which is centrally positioned at the cable Z-axis, and at least one earth conductor 28' (in the illustrated example, two). A polymeric filling material 19 fills the interstitial space between the core structures and an outer jacket 18 made of insulating polymeric material covers the filling material 19. Auxiliary tubes, not shown in the figures, may be provided within the power supply cable 20, 40, 50 and 70 according to embodiments consistent with the present disclosure (non shown in the figures). Auxiliary tubes, which do not include a power conductor, may be used in an auxiliary cooling circuit for conveying a cooling fluid to the connector in order to cool the connecting pins down or to supply cold cooling fluid to the battery of an electric vehicle or more generally to an electric device in a machine, such earth-moving or marine equipment, which is being electrically charged.

The charging cables according to the embodiments shown in the figures are round cables, i.e. cables having a circularly cross section, although cross-sectional geometry of the cable should not be considered as limitative.

The power supply cable according to the present disclosure can be a DC power cable or an AC power cable.

An outer polymeric material with relatively low hardness, such as not larger the 50, provides for more adherence of the electrical conductor, in particular of the individual or grouped wires, to the cooling tube. The Applicant has however observed that, in embodiments where the electrical conductor surrounds the cooling tube, individual wires or wire groups, especially if having a relatively small cross-sectional area, may still make relatively small movements on the cooling tube outer surface during stranding.

In embodiments, the outer surface of the cooling tube 11 is a corrugated surface. In specific embodiments with reference to the conductor assemblies of Figs. 1 and 5 (corrugations not illustrated), the radially outer surface 25b of the outer polymeric layer 13 (i.e. the outer surface of the cooling tube 11) is corrugated.

In embodiments, the outer surface 25b comprises waves forming alternating peaks and valleys, the peaks extending radially outwardly and the valley extending radially inwardly.

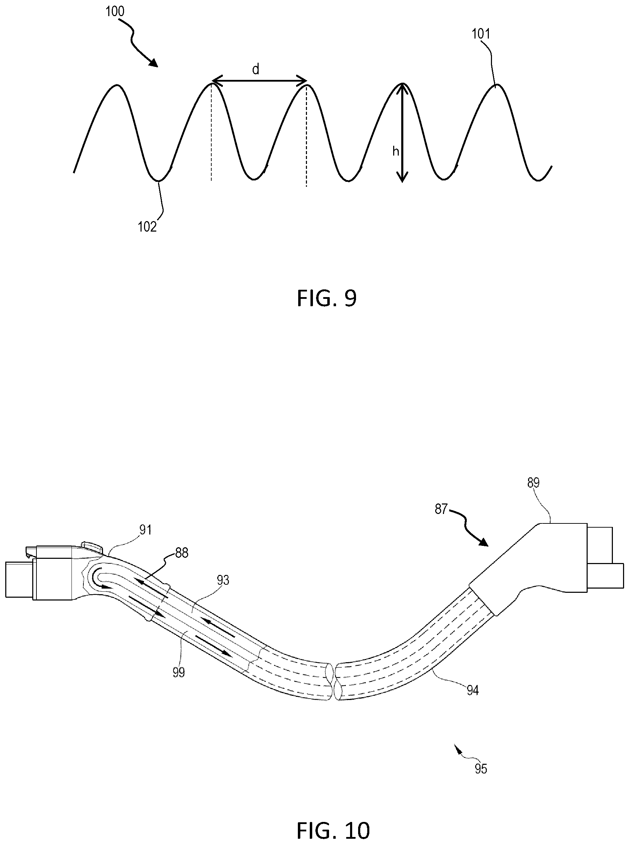

A pictorial not-to-scale representation of a waveform of the corrugated surface is given in Fig. 9. The peak-to-peak distance, d, is measured from center-to-center of peaks 101, of the exterior corrugated surface 100, and the peak-to-valley height, h, is the distance between a peak and a valley low (i.e. the lowest point of the valley. In an embodiment, d is of at least 0.2 mm. In embodiments, the peak-to-peak distance is of from 0.2 to 0.5 mm.

In embodiments, the peak-to-valley height, h, is at most 0.2 mm. In an embodiment, the peak-to-valley height is from 0.02 to 0.2 mm.

It is to be understood that the radially outer surface 25b may exhibit alternating peaks and valleys which are shaped differently compared to the pseudo-sinusoidal ones presented in Fig. 9. In some embodiments, peaks and valleys of the radially outer surface 25b have triangular shape, rectangular shape, or trapezoidal shape. Provision of a corrugated surface allows the wires to keep their position during stranding or during the extrusion of the insulating polymeric layer 15 on the stranded wires/wire groups.

Charging cables according to the embodiments described in the foregoing can be used in a power charging cable assembly for charging a battery, such as an electric vehicle battery. Figure 10 schematically illustrates a charging cable assembly according to an example consistent with the present disclosure. Charging cable assembly 95 comprises a charging cable 94, the charging cable comprising a first and a second conductor assembly 93, 99 of the type described in the foregoing embodiments. For example, the charging cable is of the type described with reference to Figs. 2, 4, 6 or 8.

The charging cable 94 has a first cable end and an opposite second cable end (not indicated in the figure). The charging cable assembly 95 comprises a first plug connector 91, which is connected to the first end of the charging cable 94. The first plug connector 91 is designed to be electrically connected to a socket (not shown) of an electric vehicle. When in use, the respective separate cooling tubes of the first and second conductor assemblies 93, 99 carry a cooling fluid flowing in opposite directions as indicated by the arrows. The cooling tubes can be fluidly connected one to another in ways per se known. For example, the charging cable assembly 95 comprises a U-shaped connecting tube 88, which can be housed in the plug connector 91 (as shown in Fig. 10) or can be external from the charging cable assembly 95.

At the second cable end, the charging cable 94 is connected to a termination portion 87, which is designed to be electrically connected to a socket of a charging device (not shown). Although not indicated in the figure, termination portion 87 typically includes electrical contacts for electrical connections of the first and second conductor assemblies 93, 99 of cable 94 to a charging device (not shown in Fig. 10) and ducts to fluidly connect the first and second conductor assemblies 93, 99 to a cooling circuit within the charging device 92.

In the example of the figure, the termination portion 87 is or comprises a second plug connector 89 designed to be electrically connected to a socket of a charging device.

As generally known, different types of plug connectors exist for either alternating current (AC) or for direct current (DC), the latter typically allowing a fast charging.

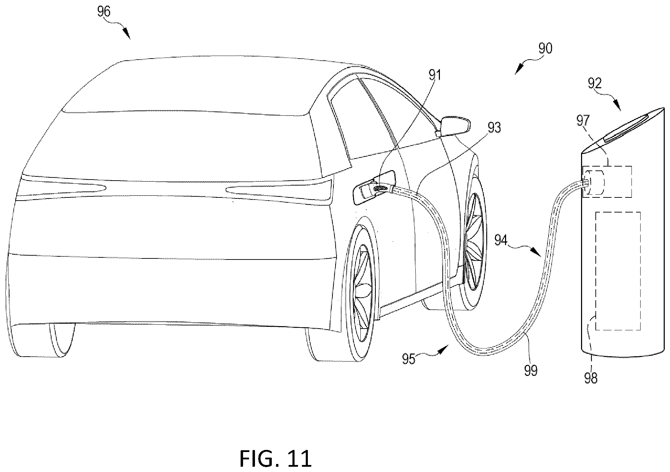

Figure 11 shows diagrammatically a charging system 90 for charging an electric vehicle 96, according to an example consistent with the present disclosure. The charging system 90 comprises a charging device 92 external with respect to vehicle 96 to be charged and a charging cable assembly 95, for example of the type described with reference to Fig. 10.

In ways per se known, the charging device 92, which can be for example a wall box or a charging station, comprises a socket outlet 97 (only schematically indicated) for electrical connection to the cable assembly 95 at its second end, in particular by means of termination portion 87, e.g. through connection with the second plug connector 89. The socket outlet 97 is configured to connect with the electrical conductors of the first and second conductor assemblies 10, 30, 60 of the charging cable 94.

Alternatively, the charging cable assembly is not provided with a second plug connector, but the termination portion (87) is configured to provide a direct and permanent connection to the electric network via the socket outlet 97 of the charging device.

The charging device 92 further comprises a cooling unit 98 (only schematically indicated) connected to the end of the charging cable assembly 95 connected with the charging device, wherein the cooling unit 98 is configured to pump a cooling fluid into a cooling tube of a conductor assembly (93 or 99) of the charging cable 94. The charging cable assembly 95 and the cooling unit 98 are designed to create, in ways per se known, a cooling loop with a fluid duct through the first cooling tube of the first conductor assembly 93 of cable 94 for guiding the fluid from the charging device 92 toward the plug connector 91 and, through a separate fluid duct through the second cooling tube of the second conductor assembly 99, from plug connector 91 back to the charging device 92.

Cooling arrangements in the charging system may be designed to cool different parts of the charging cable assembly, such as cable and/or plug connectors, and/or of the battery of the electric vehicle. Consequently, the cooling tubes of the first and second conductor assemblies 93, 99 can be fluidly connected one to another in different ways.

In an embodiment, the cooling tubes of the conductor assemblies 93, 99 are fluidly connected through the U-shaped connecting tube 88 housed in the connector plug 91.

In an embodiment, the cooling tubes of the first and second conductor assemblies 93, 99 can be fluidly connected, through the connector plug 91, to a cooling circuit configured to remove the heat from an electric device including batteries, such as an electric vehicle 96. In this configuration, the cooling tube of the first conductor assembly 93 is fluidly connected to the cooling tube of the second conductor assembly 99 through a circuit external to the power charging cable assembly 95. In operating condition, the cooling fluid runs from the cooling tube of the first conductor assembly 93 to the cooling tube of the second conductor assembly 99 removing the heat generated during the power exchange between the charging device and the electric device.

In an example, the cable assembly 95 and the cooling unit 98 may use two separate cooling loops for the cable 94 and the plug connector 91, for example in a configuration described in EP 3734618 A1.

Those skilled in the art will recognize that it is possible to combine the various features of the embodiments described above in order to obtain further embodiments, all of which are in any case encompassed by the present disclosure as defined by the following claims.

## Claims

1. A power supply cable (20; 40; 50; 70) comprising:
a plurality of conductor assemblies (10; 30; 60), each conductor assembly comprising an electrical conductor (14; 63) and a cooling tube (11) defining a central internal passage for carrying a cooling fluid, wherein
the cooling tube (11) comprises an inner polymeric layer (12) in contact with the internal passage (17) and an outer polymeric layer (13) surrounding the inner polymeric layer (12), and
the inner polymeric layer (12) has a first Shore D hardness value and the outer polymeric layer (13) has a second Shore D hardness value, the first Shore D hardness value being larger than the second Shore D hardness value.

2. The power supply cable of claim 1, wherein the first Shore D hardness value of the inner polymeric layer (12) is of from 55 to 95.

3. The power supply cable of claim 1 or 2, wherein the inner polymeric layer (12) is selected from the group consisting of thermoplastic elastomer, polyamide, polyurethane, and silicone.

4. The power supply cable of anyone of the preceding claims, wherein the second Shore D hardness value of the outer polymeric layer (13) is from 15 to 50.

5. The power supply cable of anyone of the preceding claims, wherein the outer polymeric layer (13) is made of a thermoplastic elastomer or polyamide.

6. The power supply cable of anyone of the preceding claims, wherein each of the inner polymeric layer (12) and the outer polymeric layer (13) is made of a non-expanded polymeric material.

7. The power supply cable of anyone of the preceding claims, wherein the cooling tube (11) has a thickness, and the thickness of the inner polymeric layer (12) is of less than or equal to 40% of the thickness of the cooling tube (11).

8. The power supply cable of anyone of the preceding claims, wherein the cooling tube (11) has a thickness of from 1 to 4 mm.

9. The power supply cable (20; 40; 50) of anyone of the preceding claims, wherein the electrical conductor (14) of each conductor assembly (10) is positioned to surround and be in contact with the outer polymeric layer (13) of the cooling tube (11).

10. The power supply cable (20; 40; 50) of claim 9, wherein the electrical conductor (14) includes a plurality of metallic wires or a plurality of groups of bunched wires or stranded wires on and around the outer polymeric layer (13).

11. The power supply cable (20; 40) of claim 9 or 10, wherein the outer polymeric layer (13) has a corrugated radially outer surface (25b), the corrugated radially outer surface (25b) of the outer polymeric layer (13) comprises peaks and valleys, the peaks extending radially outwardly and the valley radially inwardly.

12. The power supply cable of claim 11, wherein the peak-to-peak distance is of from 0.25 to 0.5 mm.

13. The power supply cable (70) of any of claims from 1 to 8, wherein the electrical conductor (63) of each conductor assembly (60) of the plurality of conductor assemblies is centrally positioned within the internal passage (17) of the cooling tube (11), wherein the electrical conductor (63) includes a group of stranded or bunched wires wound about a central longitudinal direction of each conductor assembly (60).

14. A power charging cable assembly (95) comprising
a power supply cable (20; 30; 40; 70; 94) according to any of claims 1 to 13, wherein
the power supply cable has a first cable end and a second opposite cable end, and the power supply cable (94) is provided with a first plug connector (91) connected at the first cable end and with a termination portion (87) at the second cable end.

15. A charging system (90) comprising:
- a power charging cable assembly (95) according to claim 14, wherein the power supply cable (20; 30; 40; 70; 94) of the power charging assembly (95) includes first and second conductor assemblies (10; 30; 60; 93; 99) having respective first and second electrical conductors (14; 63) and respective first and second cooling tubes (11);
- a charging device (92) comprising
a socket outlet (97) configured to be connected, by means of the termination portion (87) of the power charging cable assembly (95), to said respective electrical conductors (14; 63) of the first and second conductor assemblies (10; 30; 60; 93; 99), and
a cooling unit (98) connected, by means of the termination portion (87), to the respective first and second cooling tubes of the first and second conductor assemblies (10; 30; 60; 93; 99), wherein
the cooling unit (98) is configured to pump a cooling fluid into the first cooling tube for guiding the fluid from the charging device (92) toward the first plug connector (91) through the first cooling tube and, through the second cooling tube in fluid connection with the first cooling tube, from the first plug connector (91) back to the charging device (92).
